# EUROPEAN PATENT APPLICATION

(11) **EP 4 657 196 A1**
(43) Date of publication of application: **03.12.2025**
(21) Application number: 25178823.8
(22) Date of filing: 26.05.2025
(51) Int. Cl.: G05D 1/227, G05D 105/85, G05D 107/30, G05D 109/20, G08C 17/02, H04W 12/033, H04W 12/02, G08C 17/00, H04W 12/06

(54) **DISPLAY METHOD, REMOTE CONTROL APPARATUS, AND UNMANNED AERIAL VEHICLE SYSTEM**

(30) Priority: 31.05.2024 CN 202410702863
(71) Applicant: Autel Robotics Co., Ltd., Shenzhen, Guangdong 518055 (CN)
(72) Inventor: Chen, Peiguo, Taoyuan Sub-district, Nanshan District, Shenzhen, Guangdong, 518055 (CN); Feng, Yinhua, Taoyuan Sub-district, Nanshan District, Shenzhen, Guangdong, 518055 (CN)
(74) Representative: Gulde & Partner

(57) **Abstract**

This application provides a drone control method and apparatus, a device, and a storage medium, applied to a drone remote control system. The drone remote control system comprises at least two interconnected remote control terminals, the at least two remote control terminals include a primary remote control terminal and a substitute remote control terminal corresponding to the primary remote control terminal, and a function other than an image transmission function of the substitute remote control terminal is in a disabled state. The method comprises: obtaining, by the primary remote control terminal, drone control data to be sent to a target drone; and sending, by the primary remote control terminal, a data forwarding message to the substitute remote control terminal, where the data forwarding message carries the drone control data, and forwarding, by the substitute remote control terminal, the drone control data to the target drone. Based on the technical solution, a position can be in a hidden state when a drone pilot controls a drone by using the primary remote control terminal, thereby protecting the position of the drone pilot.

## Description

### BACKGROUND

### Technical Field

This application relates to the field of drones, and in particular, to a drone control method and apparatus, a device, and a storage medium.

### Related Art

A drone and a drone remote controller are two main components in a drone system, and are connected and controlled through wireless communication. The drone is an unmanned aerial vehicle, is usually equipped with a variety of sensors and devices, and is used to perform various tasks, such as aerial photography, reconnaissance, and logistics. The drone remote controller is a handheld device used to control and operate the drone. The remote controller usually comprises control elements such as a joystick, a button, a switch, and a display screen, and is used to send an instruction and receive information such as a status and an image of the drone.

A drone pilot controls the drone by using the remote controller. The drone pilot is usually in same position space as the remote controller. A position of the remote controller exposes a position of the drone pilot. Alternatively, in a process of controlling the drone by using a plurality of remote controllers, a control authority of the drone pilot is transferred by switching the remote controller. During authority transfer, a position of the current drone pilot is exposed. In some special flight tasks, position information of a drone pilot needs to be protected, to ensure security and privacy of drone operations.

### SUMMARY

This application provides a drone control method and apparatus, a device, and a storage medium, to resolve a technical problem of protecting a position of a drone pilot in a flight task of a drone.

According to a first aspect, a drone control method is provided, applied to a primary remote control terminal in a drone remote control system, where the drone remote control system comprises at least two interconnected remote control terminals, the at least two remote control terminals include the primary remote control terminal and a substitute remote control terminal corresponding to the primary remote control terminal, and a function other than an image transmission function of the substitute remote control terminal is in a disabled state; and
the method comprising:
obtaining drone control data to be sent to a target drone; and
sending a data forwarding message to the substitute remote control terminal, wherein the data forwarding message carries the drone control data, and the data forwarding message is used to instruct the substitute remote control terminal to forward the drone control data to the target drone.

In the technical solution, the drone remote control system is constructed, the drone remote control system comprises the at least two interconnected remote control terminals, and the at least two remote control terminals include the primary remote control terminal and the substitute remote control terminal corresponding to the primary remote control terminal. After obtaining the drone control data to be sent to the target drone, the primary remote control terminal sends the data forwarding message to the substitute remote control terminal, the data forwarding message carries the drone control data, and the data forwarding message is used to instruct the substitute remote control terminal to forward the drone control data to the target drone. The primary remote control terminal appends the control data to the data forwarding message intended for the drone, and the substitute remote control terminal replaces the primary remote control terminal to send the drone control data to the drone. Therefore, a position of the primary remote control terminal can be in a hidden state, so that a position of the drone pilot can be in a hidden state when a drone pilot controls the drone by using the primary remote control terminal, thereby protecting the position of the drone pilot. In addition, because the function other than the image transmission function of the substitute remote control terminal is in a disabled state, the substitute remote control terminal only needs to replace the primary remote control terminal to send the control data to the drone, so that a position exposure risk of the substitute remote control terminal can be reduced, further ensuring security and privacy of drone control.

According to a first aspect, in a possible implementation, the method further comprises: receiving target drone data forwarded by the substitute remote control terminal, wherein the target drone data is drone data collected by the target drone. The primary remote control terminal receives the target drone data forwarded by the substitute remote control terminal, thereby obtaining the target drone data without exposing the position of the primary remote control terminal, and thus enhancing security and privacy.

With reference to the first aspect, before the obtaining drone control data to be sent to a target drone, the method further comprises: obtaining a content protection key of the target drone; and sending the content protection (content protection, CP) key of the target drone to the substitute remote control terminal. The primary remote control terminal sends the CP key of the drone to the substitute remote control terminal, so that the substitute remote control terminal can be successfully authenticated by the drone, to exchange data with the drone.

According to a first aspect, in a possible implementation, the method further comprises: receiving, within a preset connection period, a first heartbeat connection message sent by the substitute remote control terminal, where the first heartbeat connection message carries first identity information, the first identity information comprises a first identity identifier, and the first identity identifier is used to indicate a substitute identity of the substitute remote control terminal; and if the first heartbeat connection message sent by the substitute remote control terminal is not received within the preset connection period, releasing a primary control identity of the primary remote control terminal, so that the primary remote control terminal is restored to an unknown remote control terminal in the drone remote control system, and starting an identity confirmation procedure of the unknown remote control terminal in the drone remote control system. When receiving no heartbeat connection message sent by the substitute remote control terminal within the preset connection period, the primary remote control terminal releases the primary control identity of the primary remote control terminal and starts the identity confirmation procedure, so that a substitute remote control terminal can be reselected when the substitute remote control terminal fails, thereby ensuring a continuous connection and interaction between the primary remote control terminal and the drone.

With reference to the first aspect, in a possible implementation, the first identity information further comprises a remaining capacity of the substitute remote control terminal; and the method further comprises: if the remaining capacity of the substitute remote control terminal is less than a preset capacity, releasing the primary control identity of the primary remote control terminal, so that the primary remote control terminal is restored to the unknown remote control terminal in the drone remote control system, and starting the identity confirmation procedure of the unknown remote control terminal in the drone remote control system. When the remaining capacity of the substitute remote control terminal is less than the preset capacity, the primary remote control terminal releases the primary control identity of the primary remote control terminal and starts the identity confirmation procedure, so that the substitute remote control terminal can be switched in time, thereby ensuring a continuous connection and interaction between the primary remote control terminal and the drone.

According to a first aspect, in a possible implementation, the method further comprises: releasing a primary control identity of the primary remote control terminal in response to an identity reset instruction, so that the primary remote control terminal is restored to an unknown remote control terminal in the drone remote control system, and starting an identity confirmation procedure of the unknown remote control terminal in the drone remote control system. When obtaining the identity reset instruction, the primary remote control terminal releases the primary control identity of the primary remote control terminal and starts an identity confirmation procedure, so that a user can switch an identity of a remote control terminal in the drone remote control system at any time, thereby flexibly controlling the drone.

According to a second aspect, another drone control method is provided, applied to a substitute remote control terminal corresponding to a primary remote control terminal in a drone remote control system, where the drone remote control system comprises at least two interconnected remote control terminals, the at least two remote control terminals include the primary remote control terminal and the substitute remote control terminal, and a function other than an image transmission function of the substitute remote control terminal is in a disabled state; and
the method comprises:
receiving a data forwarding message sent by the primary remote control terminal, where the data forwarding message carries drone control data to be sent to a target drone; and
forwarding the drone control data to the target drone.

In the technical solution, the drone remote control system is constructed, the drone remote control system comprises the at least two interconnected remote control terminals, and the at least two remote control terminals include the primary remote control terminal and the substitute remote control terminal corresponding to the primary remote control terminal. After receiving the data forwarding message sent by the primary remote control terminal, the substitute remote control terminal forwards the drone control data in the data forwarding message to the target drone. The primary remote control terminal adds, to the data forwarding message, the drone control data to be sent to the drone, and the substitute remote control terminal replaces the primary remote control terminal to send the drone control data to the drone. Therefore, a position of the primary remote control terminal can be in a hidden state, so that a position can be in a hidden state when a drone pilot controls the drone by using the primary remote control terminal, thereby protecting the position of the drone pilot. In addition, because the function other than the image transmission function of the substitute remote control terminal is in a disabled state, the substitute remote control terminal only needs to replace the primary remote control terminal to send the control data to the drone, so that a position exposure risk of the substitute remote control terminal can be reduced, thereby further ensuring security and privacy of drone control.

With reference to a second aspect, in a possible implementation, the method further comprises: receiving target drone data sent by the target drone, where the target drone data is drone data collected by the target drone; and forwarding the target drone data to the primary remote control terminal. After the substitute remote control terminal receives the drone data sent by the drone, the substitute remote control terminal forwards the drone data to the primary remote control terminal, so that the data collected by the drone can be obtained without exposing the position of the primary remote control terminal, thereby improving security and privacy.

With reference to the second aspect, in a possible implementation, before the receiving a data forwarding message sent by the primary remote control terminal, the method further comprises: receiving a content protection key of the target drone sent by the primary remote control terminal. Before forwarding the drone control data to the drone, the substitute remote control terminal further receives the CP key of the drone sent by the primary remote control terminal, so that the substitute remote control terminal can be successfully authenticated by the drone, to exchange data with the drone.

With reference to a second aspect, in a possible implementation, the method further comprises: receiving, within a preset connection period, a second heartbeat connection message sent by the primary remote control terminal, where the second heartbeat connection message carries second identity information, the second identity information comprises a second identity identifier, and the second identity identifier is used to indicate a primary control identity of the primary remote control terminal; and if the second heartbeat connection message sent by the primary remote control terminal is not received within the preset connection period, releasing a substitute identity of the substitute remote control terminal, so that the substitute remote control terminal is restored to an unknown remote control terminal in the drone remote control system.

With reference to a second aspect, in a possible implementation, the method further comprises: releasing a substitute identity of the substitute remote control terminal in response to an identity reset instruction, so that the substitute remote control terminal is restored to an unknown remote control terminal in the drone remote control system, and starting an identity confirmation procedure of the unknown remote control terminal in the drone remote control system. When obtaining the identity reset instruction, the substitute remote control terminal releases a primary control identity of the substitute remote control terminal and starts an identity confirmation procedure, so that a user can switch an identity of a remote control terminal in the drone remote control system at any time, thereby flexibly controlling the drone.

According to a third aspect, a drone control apparatus is provided, applied to a primary remote control terminal in a drone remote control system, where the drone remote control system comprises at least two interconnected remote control terminals, the at least two remote control terminals include the primary remote control terminal and a substitute remote control terminal corresponding to the primary remote control terminal, and a function other than an image transmission function of the substitute remote control terminal is in a disabled state; and
the apparatus comprises:
a data obtaining module, configured to obtain drone control data to be sent to a target drone; and
a sending module, configured to send a data forwarding message to the substitute remote control terminal, where the data forwarding message carries the drone control data, and the data forwarding message is used to instruct the substitute remote control terminal to forward the drone control data to the target drone.

According to a fourth aspect, another drone control apparatus is provided, applied to a substitute remote control terminal corresponding to a primary remote control terminal in a drone remote control system, where the drone remote control system comprises at least two interconnected remote control terminals, the at least two remote control terminals include the primary remote control terminal and the substitute remote control terminal, and a function other than an image transmission function of the substitute remote control terminal is in a disabled state; and
the apparatus comprises:
a receiving module, configured to receive a data forwarding message sent by the primary remote control terminal, where the data forwarding message carries drone control data to be sent to a target drone; and
a sending module, configured to forward the drone control data to the target drone.

According to a fifth aspect, a computer device is provided, including a memory, a communication component, and one or more processors, where the memory and the communication component are connected to the one or more processors, the one or more processors are configured to execute one or more computer programs stored in the memory, and the one or more processors, when executing the one or more computer programs, cause the computer device to implement the drone control method according to the first aspect or the second aspect.

According to a sixth aspect, a computer-readable storage medium is provided, where the computer-readable storage medium stores a computer program, the computer program comprises a program instruction, and the program instruction, when executed by a processor, causes the processor to perform the drone control method according to the first aspect or the second aspect.

According to a seventh aspect, a drone remote control system is provided, where the drone remote control system comprises at least two interconnected remote control terminals, the at least two remote control terminals include a primary remote control terminal and a substitute remote control terminal corresponding to the primary remote control terminal, and a function other than an image transmission function of the substitute remote control terminal is in a disabled state; and the primary remote control terminal is configured to perform the drone control method according to the first aspect, and the substitute remote control terminal is configured to perform the drone control method according to the second aspect.

This application may implement the following technical effects: The primary remote control terminal adds, to the data forwarding message, the drone control data to be sent to the drone, and the substitute remote control terminal replaces the primary remote control terminal to send the drone control data to the drone. Therefore, a position of the primary remote control terminal can be in a hidden state, so that a position can be in a hidden state when a drone pilot controls the drone by using the primary remote control terminal, thereby protecting the position of the drone pilot. In addition, because the function other than the image transmission function of the substitute remote control terminal is in a disabled state, the substitute remote control terminal only needs to replace the primary remote control terminal to send the control data to the drone, so that a position exposure risk of the substitute remote control terminal can be reduced, thereby further ensuring security and privacy of drone control.

### BRIEF DESCRIPTION OF THE DRAWINGS

One or more embodiments are exemplified by pictures in corresponding accompanying drawings. These exemplary descriptions do not constitute a limitation to the embodiments. Elements/modules and steps in the accompanying drawings having the same reference numerals are represented as similar elements/modules and steps. Unless otherwise stated, figures in the accompanying drawings do not constitute a proportional limitation.
FIG. 1 is a schematic composition diagram of a structure of a drone remote control system according to an embodiment of this application;
FIG. 2 is a schematic flowchart of a drone control method according to an embodiment of this application;
FIG. 3 is a schematic diagram of communication and an interaction between a primary remote control terminal and a substitute remote control terminal according to an embodiment of this application;
FIG. 4 is a schematic diagram of a structure of a drone control apparatus according to an embodiment of this application;
FIG. 5 is a schematic diagram of a structure of another drone control apparatus according to an embodiment of this application; and
FIG. 6 is a schematic diagram of a structure of a computer device to according to an embodiment of this application.

### DETAILED DESCRIPTION

The following describes the technical solutions in the embodiments of this application with reference to the accompanying drawings in embodiments of this application.

The technical solutions of this application are applicable to a drone control scenario. In the drone control scenario, a drone pilot usually controls a drone by using a remote controller. The remote controller may deliver a flight command to the drone under control of the drone pilot, to control flight of the drone. Alternatively, the remote controller may receive a flight task delivered by a background flight control system of the drone, and send the flight task to the drone, to control flight of the drone.

In a conventional flight control solution, a drone pilot controls flight of one drone by using one remote controller. A problem of this solution is that the drone pilot and the drone that is actually controlled are located in same position space. When a position of the remote controller is found, a position of the drone pilot is exposed. In this application, a drone remote control system including at least two remote control terminals is constructed. Different remote control terminals are in different position space, and a drone pilot controls flight of a drone by using the drone remote control system, to hide a position of the drone pilot.

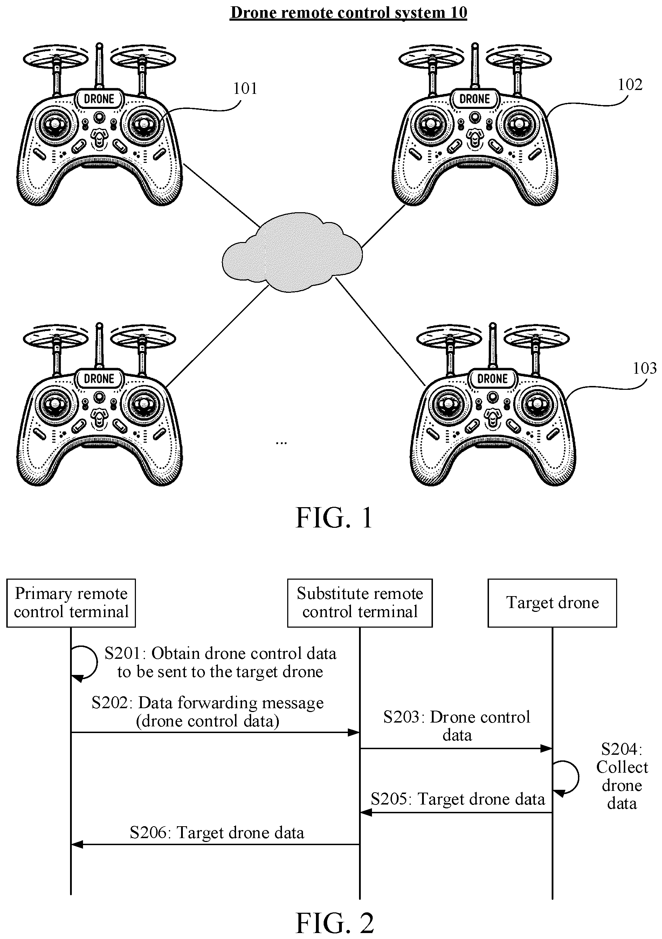

For ease of understanding, the drone remote control system in this application is first described. Refer to FIG. 1. FIG. 1 is a schematic composition diagram of a structure of a drone remote control system according to an embodiment of this application. As shown in FIG. 1, the drone remote control system 10 comprises at least two remote control terminals, and the at least two remote control terminals may be distributed in different position space. The at least two remote control terminals are interconnected, and a connection between the at least two remote control terminals may be a wired connection. For example, the at least two remote control terminals are connected by using a network cable. Alternatively, a connection between the at least two remote control terminals may be a wireless connection. For example, the at least two remote control terminals are connected by using Bluetooth, a data network, a WiFi network, or the like.

The at least two remote control terminals include a primary remote control terminal 101 and a substitute remote control terminal 102 corresponding to the primary remote control terminal 101. An identity of the primary remote control terminal 101 in the drone remote control system 10 is a primary control identity. That is, the primary remote control terminal 101 is a remote control terminal that is actually controlled by a user (for example, a drone pilot). The user controls flight of a drone by using the primary remote control terminal 101. An image transmission function of the primary remote control terminal 101 is in a disabled state, and a function other than the image transmission function of the primary remote control terminal 101 is in an enabled state. In this way, the primary remote control terminal 101 can be enabled to respond to various remote control operations from the user. An identity of the substitute remote control terminal 102 in the drone remote control system 10 is a substitute identity. That is, the substitute remote control terminal 102 is a remote control terminal that replaces the primary remote control terminal 101 to exchange data with the drone. An image transmission function of the substitute remote control terminal 102 is in an enabled state, and a function other than the image transmission function of the substitute remote control terminal 102 is in a disabled state. In this way, the substitute remote control terminal only needs to replace the primary remote control terminal to exchange data with the drone, so that a position exposure risk of the substitute remote control terminal can be reduced.

The at least two remote control terminals may further include an unknown remote control terminal 103, and an identity of the unknown remote control terminal 103 in the drone remote control system is an unknown identity. All functions of the unknown remote control terminal 103 are in an enabled state.

The unknown remote control terminal 103 may be a standby remote control terminal of the primary remote control terminal 101, that is, the unknown remote control terminal 103 may be converted into a primary control identity in the drone remote control system 10, and become a primary remote control terminal 101. Alternatively, the unknown remote control terminal 103 may be a standby remote control terminal of the substitute remote control terminal 102, that is, the unknown remote control terminal 103 may be converted into a substitute identity in the drone remote control system 10, and become a substitute remote control terminal 102. Alternatively, the primary remote control terminal 101 and the substitute remote control terminal 102 may be converted into unknown identities in the drone remote control system 10, and become unknown remote control terminals 103. There may be one primary remote control terminal 101 and one substitute remote control terminal 102 in the drone remote control system 10 at most, and there may be a plurality of unknown remote control terminals 103 in the drone remote control system 10.

The technical solutions of this application may be implemented based on the drone remote control system shown in FIG. 1. The following describes the technical solutions of this application in detail.

Refer to FIG. 2. FIG. 2 is a schematic flowchart of a drone control method according to an embodiment of this application. As shown in FIG. 2, the method comprises the following steps.

S201: A primary remote control terminal obtains drone control data to be sent to a target drone.

Herein, for a definition of the primary remote control terminal, refer to the descriptions corresponding to FIG. 1. When all remote control terminals in a drone remote control system are unknown remote control terminals, a user may select and set the primary remote control terminal. Generally, the user may select, as the primary remote control terminal, a remote control terminal located in same position space as the user.

The target drone is a drone that the user intends to actually control by using the remote control terminal. The primary remote control terminal may determine the to-be-sent drone control data based on a user operation executed by the user on the primary remote control terminal. Alternatively, the primary remote control terminal may receive a flight task sent by a background flight control system of the target drone, and determine the to-be-sent drone control data based on the flight task sent by the background flight control system of the target drone.

S202: The primary remote control terminal sends a data forwarding message to a substitute remote control terminal, where the data forwarding message carries the drone control data, and the substitute remote control terminal receives the data forwarding message.

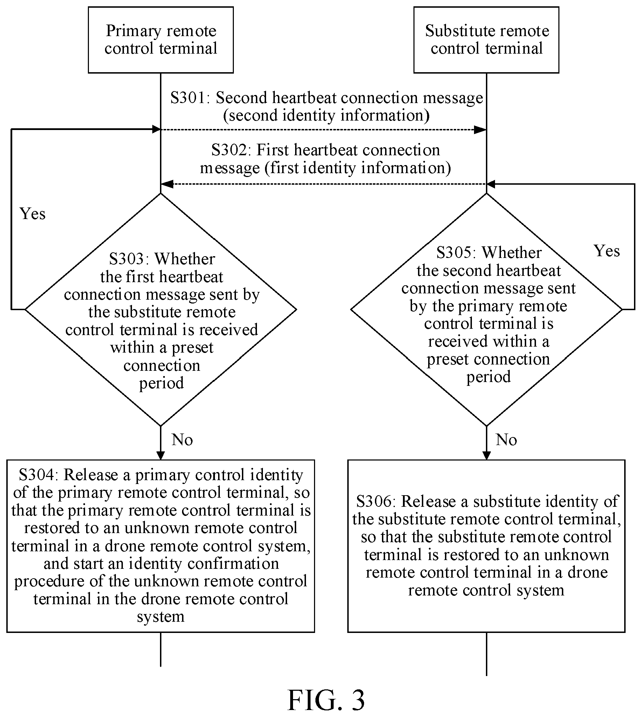

Herein, for a definition of the substitute remote control terminal, refer to the descriptions in FIG. 1. The substitute remote control terminal may be selected and set by the user after the user selects the primary remote control terminal in the drone remote control system. Alternatively, the user may first select the substitute remote control terminal before selecting the primary remote control terminal in a drone network. The user may trigger and start, on any unknown remote control terminal in the drone network, an identity confirmation procedure of the unknown remote control terminal in the drone remote control system, to select the substitute remote control terminal and the primary remote control terminal. A specific implementation of starting the identity confirmation procedure of the unknown remote control terminal in the drone remote control system is described in detail in a subsequent technical solution corresponding to FIG. 3, and no further details are described herein.

The primary remote control terminal may send the data forwarding message to the substitute remote control terminal through a connection to the substitute remote control terminal, and the substitute remote control terminal may receive, through a connection to the primary remote control terminal, the data forwarding message sent by the primary remote control terminal.

The data forwarding message is used to instruct the substitute remote control terminal to forward the drone control data to the target drone. In addition to the drone control data, the data forwarding message may further carry a terminal identifier of the primary remote control terminal. The terminal identifier of the primary remote control terminal is used to uniquely indicate the primary remote control terminal in the drone remote control system, so that after receiving the data forwarding message, the substitute remote control terminal may determine, based on the terminal identifier of the primary remote control terminal, that the data forwarding message is a message sent by the primary remote control terminal. The data forwarding message may further carry a second identity identifier. The second identity identifier is used to indicate a primary control identity of the primary remote control terminal, so that the substitute remote control terminal can determine the primary control identity of the primary remote control terminal based on the second identity identifier after receiving the data forwarding message. The data forwarding message may further carry a forwarding indication and a drone identifier of the target drone, so that the substitute remote control terminal can determine, based on the forwarding indication, that the drone control data in the data forwarding message needs to be forwarded to the target drone.

S203: The substitute remote control terminal sends the drone control data to the target drone, and the target drone receives the drone control data.

The substitute remote control terminal may establish a communication connection to the target drone, and send the drone control data to the target drone through the communication connection to the target drone. The target drone may receive, through the communication connection to the substitute remote control terminal, the drone control data sent by the substitute remote control terminal.

After receiving the drone control data, the target drone may perform a corresponding flight operation based on the drone control data.

S204: The target drone collects drone data.

Herein, the drone data is various data collected by the drone. The drone data may include data related to flight of the drone, such as position data of the drone, a remaining capacity of the drone, attitude data of the drone, speed data of the drone, and an engine parameter of the drone. The drone data may further include image transmission data, and the image transmission data is data photographed by a camera mounted on the drone.

S205: The target drone sends target drone data to the substitute remote control terminal, and the substitute remote control terminal receives the target drone data.

The target drone data is drone data collected by the target drone.

The target drone may send the target drone data through the communication connection to the substitute terminal, and the substitute remote control terminal may receive the target drone data through the communication connection to the target drone.

S206: The substitute remote control terminal sends the target drone data to the primary remote control terminal, and the primary remote control terminal receives the target drone data.

The substitute remote control terminal may send the target drone data to the primary remote control terminal through a connection between the substitute remote control terminal and the primary remote control terminal, and the primary remote control terminal may receive, through the connection between the primary remote control terminal and the substitute remote control terminal, the target drone data sent by the substitute remote control terminal.

**In** the technical solution corresponding to FIG. 2, after obtaining the drone control data to be sent to the target drone, the primary remote control terminal sends the data forwarding message to the substitute remote control terminal, and the data forwarding message carries the drone control data. After receiving the data forwarding message, the substitute remote control terminal forwards the drone control data in the data forwarding message to the target drone. The target drone sends the collected drone data to the substitute remote control terminal, and after receiving the drone data, the substitute remote control terminal forwards the drone data to the primary remote control terminal. Equivalently, the substitute remote control terminal replaces the primary remote control terminal to exchange data with the drone, and a position of the primary remote control terminal can be in a hidden state, so that a position can be a hidden state when a drone pilot controls the drone by using the primary remote control terminal, thereby protecting the position of the drone pilot. In addition, because a function other than an image transmission function of the substitute remote control terminal is in a disabled state, the substitute remote control terminal only needs to replace the primary remote control terminal to exchange data with the drone, so that a position exposure risk of the substitute remote control terminal can be reduced, thereby further ensuring security and privacy of drone control.

The substitute remote control terminal may establish a communication connection to the target drone based on a content protection key of the target drone. Before obtaining the control data to be sent to the target drone, the primary remote control terminal may obtain the content protection key of the target drone and send the content protection key of the target drone to the substitute remote control terminal. The primary remote control terminal may send the content protection key of the target drone to the substitute remote control terminal through the connection between the primary remote control terminal and the substitute remote control terminal, and the substitute remote control terminal may receive the content protection key of the target drone through the connection between the substitute remote control terminal and the primary remote control terminal.

After receiving the content protection key of the target drone, the substitute remote control terminal may determine whether an identity of the substitute remote control terminal is a substitute identity. After confirming that the identity of the substitute remote control terminal is the substitute identity, the substitute remote control terminal initiates a mutual authentication procedure with the target drone based on the content protection key of the target drone, thereby establishing a communication connection to the target drone. An exemplary mutual authentication procedure may be as follows:
(1) The substitute remote control terminal sends an authentication request to the target drone, where the authentication request carries a terminal identifier of the substitute remote control terminal, and the terminal identifier of the substitute remote control terminal is used for uniquely identifying the substitute remote control terminal.
(2) After receiving the authentication request, the target drone generates a random challenge code, encrypts the random challenge code by using the content protection key of the target drone, adds an encryption result to an authentication response, and sends the authentication response to the substitute remote control terminal.
(3) After receiving the authentication response, the substitute remote control terminal obtains the encryption result from the authentication response, decrypts the random challenge code by using the content protection key of the target drone, and sends a decryption result to the target drone.
(4) The target drone compares whether the decryption result is consistent with the random challenge code stored in the target drone, and if the decryption result is consistent with the random challenge code stored in the target drone, sends an authentication confirmation message to the substitute remote control terminal.

After receiving the authentication confirmation message, the substitute remote control terminal may confirm that mutual authentication with the target drone is completed, and the target drone is in a controllable state. The substitute remote control terminal establishes a communication connection to the target drone, and the substitute remote control terminal may exchange data with the target drone. It should be understood that, (1) to (4) are only an example in which the mutual authentication between the substitute remote control terminal and the target drone is described in this application. Alternatively, the substitute remote control terminal and the target drone may complete mutual authentication based on the content protection key of the target drone through other authentication. This is not limited in this application.

After performing the mutual authentication with the target drone and establishing a communication connection, the target drone may further encrypt, by using the content protection key of the target drone, the drone data collected by the target drone, and send the encrypted drone data to the substitute remote control terminal. The substitute remote control terminal may decrypt the encrypted drone data by using the content protection key of the target drone, to obtain the drone data used before encryption.

The primary remote control terminal sends the CP key of the drone to the substitute remote control terminal, so that the substitute remote control terminal can be successfully authenticated by the drone, to exchange data with the drone.

In some possible cases, the primary remote control terminal may periodically communicate with the substitute remote control terminal, to periodically send the content protection key of the target drone to the substitute remote control terminal.

Refer to FIG. 3. FIG. 3 is a schematic diagram of communication and an interaction between a primary remote control terminal and a substitute remote control terminal according to an embodiment of this application. As shown in FIG. 3, the following steps are included:
S301: The primary remote control terminal sends a second heartbeat connection message to the substitute remote control terminal, where the second heartbeat connection message carries second identity information.

Herein, the heartbeat connection message is used to maintain an active state of a connection. The second heartbeat connection message is used to indicate an online state of the primary remote control terminal.

The second identity information comprises a second identity identifier, and the second identity identifier is used to indicate a substitute identity of the primary remote control terminal. In addition to the second identity identifier, the second identity information may further include a content protection key of a target drone.

The primary remote control terminal may add the second identity identifier and the content protection key of the target drone to the second heartbeat connection message, and periodically send the second heartbeat connection message to the substitute remote control terminal based on a preset frequency.

The preset frequency is a frequency corresponding to connection maintenance. The preset frequency may be, for example, 2 hertz (Hz), that is, the primary remote control terminal may send the second heartbeat connection message to the substitute remote control terminal based on a frequency of 2 Hz.

Because remote control terminals in a drone remote control system are interconnected, in a feasible implementation, the primary remote control terminal may periodically send the second heartbeat connection message to the drone remote control system based on the preset frequency in a broadcast manner, and the remote control terminals in the drone remote control system may all receive the second heartbeat connection message. After receiving the second heartbeat connection message, an unknown remote control terminal in the drone remote control system obtains the content protection key of the target drone from the second heartbeat connection message. Because an identity of the unknown remote control terminal is an unknown identity, the unknown remote control terminal processes the content protection key of the target drone. After receiving the second heartbeat connection message, the substitute remote control terminal in the drone remote control system obtains the content protection key of the target drone from the second heartbeat connection message. Because an identity of the substitute remote control terminal is a substitute identity, the substitute remote control terminal determines whether a communication connection to the target drone is established. If the communication connection to the target drone is not established, the substitute remote control terminal establishes the communication connection to the target drone based on the content protection key of the target drone. If the communication connection to the target drone is already established, the substitute remote control terminal exchanges data with the target drone based on the content protection key of the target drone.

S302: The substitute remote control terminal sends a first heartbeat connection message to the primary remote control terminal, where the first heartbeat connection message carries first identity information.

Herein, the first heartbeat connection message is used to indicate an online state of the substitute remote control terminal. The first identity information comprises a first identity identifier, and the second identity identifier is used to indicate a substitute identity of the substitute remote control terminal. **In** addition to the first identity identifier, the first identity information may further include a remaining capacity of the substitute remote control terminal.

The substitute remote control terminal may add the first identity identifier and the remaining capacity of the substitute remote control terminal to the first heartbeat connection message, and periodically send the first heartbeat connection message to the primary remote control terminal based on a preset frequency. For example, the substitute remote control terminal may send the first heartbeat connection message to the primary remote control terminal based on a frequency of 2 Hz.

Similar to step S301, the substitute remote control terminal may periodically send the first heartbeat connection message to the drone remote control system based on the preset frequency in a broadcast manner, and remote control terminals in the drone remote control system may all receive the first heartbeat connection message. After receiving the first heartbeat connection message, the primary remote control terminal in the drone remote control system may obtain the remaining capacity of the substitute remote control terminal from the first heartbeat connection message.

S303: The primary remote control terminal determines whether the first heartbeat connection message sent by the substitute remote control terminal is received within a preset connection period.

Herein, the preset connection period is a time length for determining whether a connection between devices is normal.

If the first heartbeat connection message sent by the substitute remote control terminal is received within the preset connection period, it indicates that the substitute remote control terminal is still in an online state, that is, a connection between the substitute remote control terminal and the primary remote control terminal is normal, and step S301 is performed. If the first heartbeat connection message sent by the substitute remote control terminal is not received within the preset connection period, it indicates that the substitute remote control terminal is in an offline state, that is, the substitute remote control terminal is disconnected from the primary remote control terminal, and step S304 is performed. For example, the preset connection period may be 2 seconds.

When receiving no heartbeat connection message sent by the substitute remote control terminal within the preset connection period, the primary remote control terminal releases a primary control identity of the primary remote control terminal and starts an identity confirmation procedure, so that a substitute remote control terminal can be reselected when the substitute remote control terminal fails, thereby ensuring a continuous connection and interaction between the primary remote control terminal and the drone.

Optionally, in some possible cases, if the first heartbeat connection message sent by the substitute remote control terminal is received within the preset connection period, the primary remote control terminal may further obtain a remaining capacity of the substitute remote control terminal from the first heartbeat connection message, and determine whether the remaining capacity of the substitute remote control terminal is less than a preset capacity. If the remaining capacity of the substitute remote control terminal is less than the preset capacity, it indicates that a capacity of the substitute remote control terminal is insufficient and that the substitute remote control terminal is no longer suitable as a substitute of the primary remote control terminal, and the primary remote control terminal may perform step S304. If the remaining capacity of the substitute remote control terminal is greater than the preset capacity, it indicates that a capacity of the substitute remote control terminal is sufficient and that the substitute remote control terminal is still suitable as a substitute of the primary remote control terminal, and step S301 is performed.

When the remaining capacity of the substitute remote control terminal is less than the preset capacity, the primary remote control terminal releases the primary control identity of the primary remote control terminal and starts the identity confirmation procedure, so that the substitute remote control terminal can be switched in time, thereby ensuring a continuous connection and interaction between the primary remote control terminal and the drone.

Optionally, in some possible cases, if the first heartbeat connection message sent by the substitute remote control terminal is received within the preset connection period, the primary remote control terminal may further detect signal strength of the first heartbeat connection message. If the signal strength of the first heartbeat connection message is less than preset signal strength, it indicates that a communication signal of the substitute remote control terminal is weak and that the substitute remote control terminal is no longer suitable as a substitute of the primary remote control terminal, and the primary remote control terminal performs step S304. If signal strength of the first heartbeat connection message is greater than preset signal strength, it indicates that a communication signal of the substitute remote control terminal is strong and that the substitute remote control terminal is still suitable as a substitute of the primary remote control terminal, and step S301 is performed.

When the signal strength of the heartbeat connection message sent by the substitute remote control terminal is less than the preset signal strength, the primary remote control terminal releases a primary control identity of the primary remote control terminal and starts the identity confirmation procedure, so that the substitute remote control terminal can be switched in time, thereby ensuring a continuous connection and interaction between the primary remote control terminal and the drone.

S304: Release the primary control identity of the primary remote control terminal, so that the primary remote control terminal is restored to an unknown remote control terminal in the drone remote control system, and start an identity confirmation procedure of the unknown remote control terminal in the drone remote control system.

The primary remote control terminal may modify an identity identifier of the primary remote control terminal, to modify the identity identifier of the primary remote control terminal from the second identity identifier to a third identity identifier, where the third identity identifier is an identity identifier of the unknown remote control terminal, and enable an image transmission function of the primary remote control terminal, to release the primary control identity of the primary remote control terminal, so that the primary remote control terminal is restored to the unknown remote control terminal in the drone remote control system.

Starting the identity confirmation procedure of the unknown remote control terminal in the drone remote control system is a procedure of selecting and setting a primary remote control terminal and a substitute remote control terminal of the primary remote control terminal from unknown remote control terminals in the drone remote control system.

The identity confirmation procedure of the unknown remote control terminal in the drone remote control system may be started by using the following several cases, to complete identity confirmation on the primary remote control terminal and the substitute remote control terminal of the primary remote control terminal:

### Case 1: Select the primary remote control terminal and the substitute remote control terminal of the primary remote control terminal based on user settings

In this case, in a feasible implementation, the unknown remote control terminal (referred to as a current remote control terminal below) restored from the primary remote control terminal may display a terminal identifier of the current remote control terminal to a user, and the user may set the current remote control terminal as the primary remote control terminal or the substitute remote control terminal.

If the user sets the current remote control terminal as the primary remote control terminal, the current remote control terminal modifies an identity identifier of the current remote control terminal from the third identity identifier into the second identity identifier, disables an image transmission function of the current remote control terminal, and becomes the primary remote control terminal. The current remote control terminal further displays terminal identifiers of other unknown remote control terminals in the drone remote control system to the user. The user selects one unknown remote control terminal from the other unknown remote control terminals as the substitute remote control terminal. The current remote control terminal uses, as a target remote control terminal, the unknown remote control terminal selected by the user, and sends a first identity indication message to the target remote control terminal. The first identity indication message carries the second identity identifier, the terminal identifier (referred to as a current terminal identifier below) of the current remote control terminal, and the content protection key of the target drone. After receiving the first identity indication message, the target remote control terminal may determine, based on the second identity identifier and the current terminal identifier, that the remote control terminal corresponding to the current terminal identifier is the primary remote control terminal, modify an identity identifier of the target remote control terminal from the third identity identifier into the first identity identifier, disable a function other than an image transmission function of the target remote control terminal, and become the substitute remote control terminal.

If the user sets the current remote control terminal as the substitute remote control terminal, the current remote control terminal modifies an identity identifier of the current remote control terminal from the third identity identifier into the first identity identifier, disables a function other than an image transmission function of the current remote control terminal, and becomes the substitute remote control terminal. The current remote control terminal further displays terminal identifiers of other unknown remote control terminals in the drone remote control system to the user. The user selects one unknown remote control terminal from the other unknown remote control terminals as the primary remote control terminal. The current remote control terminal uses, as a target remote control terminal, the unknown remote control terminal selected by the user, and sends a second identity indication message to the target remote control terminal. The second identity indication message carries the first identity identifier, a current terminal identifier, and a remaining capacity of the current remote control terminal. After receiving the second identity indication message, the target remote control terminal may determine, based on the first identity identifier and the current terminal identifier, that the remote control terminal corresponding to the current terminal identifier is the substitute remote control terminal, modify an identity identifier of the target remote control terminal from the third identity identifier into the second identity identifier, disable an image transmission function of the target remote control terminal, and become the primary remote control terminal.

### Case 2: Automatically select and set the primary remote control terminal and the substitute remote control terminal of the primary remote control terminal

In this case, in a feasible implementation, a current remote control terminal may be determined as the primary remote control terminal, and the current remote control terminal modifies an identity identifier of the current remote control terminal from a third identity identifier into the second identity identifier, disables an image transmission function of the current remote control terminal, and becomes the primary remote control terminal. The current remote control terminal further determines, based on a remaining capacity of another unknown remote control terminal in the drone remote control system, an unknown remote control terminal having a highest remaining capacity in the drone remote control system as a target remote control terminal. The current remote control terminal sends a first identity indication message to the target remote control terminal. The first identity indication message carries the second identity identifier, a terminal identifier of the current remote control terminal (referred to as a current terminal identifier below), and a content protection key of the target drone. After receiving the first identity indication message, the target remote control terminal may determine, based on the second identity identifier and the current terminal identifier, that the remote control terminal corresponding to the current terminal identifier is the primary remote control terminal, modify an identity identifier of the target remote control terminal from the third identity identifier into the first identity identifier, disable a function other than an image transmission function of the target remote control terminal, and become the substitute remote control terminal.

Alternatively, in a process of determining the primary remote control terminal, the current remote control terminal may further determine a terminal identifier of a standby remote control terminal of the current remote control terminal, where the standby remote control terminal of the current remote control terminal is a remote control terminal at a same spatial position as the current remote control terminal, and obtain a remaining capacity of the standby remote control terminal. A remote control terminal having a relatively large remaining capacity is determined from the current remote control terminal and the standby remote control terminal as the primary remote control terminal. The primary remote control terminal determines the substitute remote control terminal from the other unknown remote control terminals in the drone remote control system.

Alternatively, in a process of determining the substitute remote control terminal, the current remote control terminal may determine the target remote control terminal in a polling and traversing manner. A specific implementation of automatically selecting and setting the primary remote control terminal and the substitute remote control terminal of the primary remote control terminal is not limited in this application.

Optionally, in some possible cases, the primary remote control terminal may further perform step S304 in response to an identity reset instruction. The identity reset instruction may be triggered by a user. The user may trigger the identity reset instruction by using a function menu or a function button on the primary remote control terminal. The identity reset instruction is used to instruct to reset the primary remote control terminal and the substitute remote control terminal.

When obtaining the identity reset instruction, the primary remote control terminal releases the primary control identity of the primary remote control terminal and starts the identity confirmation procedure, so that the user can switch an identity of a remote control terminal in the drone remote control system at any time, thereby flexibly controlling the drone.

Optionally, in some possible cases, the primary remote control terminal may further detect a time length of a continuous connection between the primary remote control terminal and the substitute remote control terminal, and determine whether the time length of the continuous connection is greater than a preset time length. If the time length of the continuous connection is greater than the preset time length, it indicates that the primary remote control terminal uses the current substitute remote control terminal as a substitute for a relatively long time, and step S304 is performed. If the time length of the continuous connection is less than or equal to the preset time length, it indicates that the primary remote control terminal uses the current substitute remote control terminal as a substitute for a relatively short time, and step S301 is performed.

When the time length of the continuous connection between the primary remote control terminal and the substitute remote control terminal is greater than the preset time length, the primary remote control terminal releases the primary control identity of the primary remote control terminal and starts the identity confirmation procedure, so that the substitute remote control terminal can be switched at any time, thereby reducing a position exposure risk of the primary remote control terminal.

Optionally, in some possible cases, the primary remote control terminal may further detect a remaining capacity of the primary remote control terminal. If the remaining capacity of the primary remote control terminal is less than a preset capacity, it indicates that the capacity of the primary remote control terminal is insufficient, and step S304 is performed. If the remaining capacity of the primary remote control terminal is less than the preset capacity, it indicates that the capacity of the primary remote control terminal is sufficient, and step S301 is performed.

When the capacity of the primary remote control terminal is insufficient, the primary control identity of the primary remote control terminal is released, so that the primary remote control terminal is restored to an unknown remote control terminal in the drone remote control system, and an identity confirmation procedure of the unknown remote control terminal in the drone remote control system is started, so that the user can switch the primary remote control terminal in time, thereby ensuring a sufficient capacity of the primary remote control terminal.

S305: The substitute remote control terminal determines whether the second heartbeat connection message sent by the primary remote control terminal is received within the preset connection period.

If the second heartbeat connection message sent by the primary remote control terminal is received within the preset connection period, it indicates that the primary remote control terminal is still in an online state, that is, a connection between the primary remote control terminal and the substitute remote control terminal is normal, and step S302 is performed. If the second heartbeat connection message sent by the primary remote control terminal is not received within the preset connection period, it indicates that the primary remote control terminal is in an offline state, that is, the primary remote control terminal is disconnected from the substitute remote control terminal, and step S306 is performed.

S306: Release a substitute identity of the substitute remote control terminal, so that the substitute remote control terminal is restored to an unknown remote control terminal in the drone remote control system.

The substitute remote control terminal may modify an identity identifier of the substitute remote control terminal, to modify the identity identifier of the substitute remote control terminal from the second identity identifier to a third identity identifier, and enable a function other than an image transmission function of the substitute remote control terminal, to release the substitute identity of the substitute remote control terminal, so that the substitute remote control terminal is restored to the unknown remote control terminal in the drone remote control system.

Optionally, in some possible cases, the substitute remote control terminal may further release the substitute identity of the substitute remote control terminal in response to an identity reset instruction, so that the substitute remote control terminal is restored to the unknown remote control terminal in the drone remote control system, and start an identity confirmation procedure of the unknown remote control terminal in the drone remote control system. The substitute remote control terminal may start the identity confirmation procedure of the unknown remote control terminal in the drone remote control system with reference to the case 1 described in the foregoing step S304. Refer to the descriptions of the foregoing step S304. Details are not described herein again.

In the technical solution corresponding to FIG. 3, the primary remote control terminal and the substitute remote control terminal send heartbeat connection messages to each other, determine whether the heartbeat connection message of the other is received within the preset connection period. If the heartbeat connection message of the other is not received within the preset connection period, the identity is released and restored to the unknown remote control terminal. After the primary remote control terminal is restored to the unknown remote control terminal, the identity confirmation procedure of the unknown remote control terminal in the drone remote control system is further started, so that a connection abnormality between the primary remote control terminal and the substitute remote control terminal can be found in time, thereby avoiding an error of a data transmission terminal, and improving connection stability between the primary remote control terminal and the substitute remote control terminal.

The foregoing describes the method of this application, and the following describes an apparatus of this application.

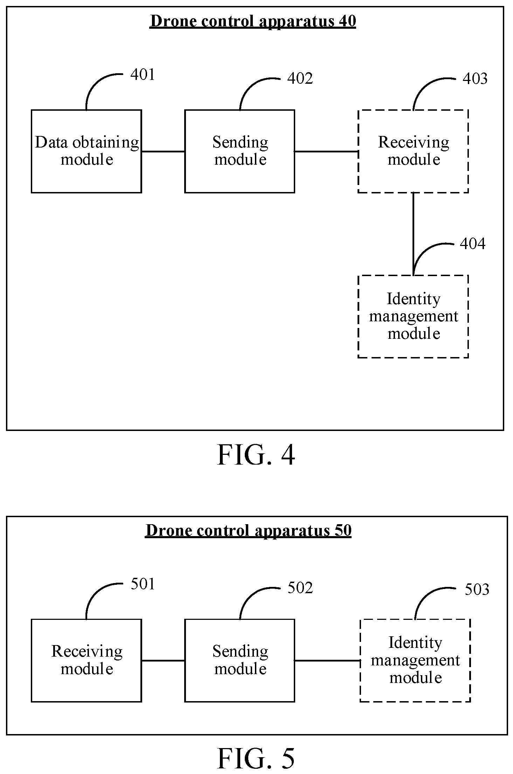

Refer to FIG. 4. FIG. 4 is a schematic diagram of a structure of a drone control apparatus according to an embodiment of this application. The apparatus is applied to a primary remote control terminal in a drone remote control system. The drone remote control system may be shown in FIG. 1. As shown in FIG. 4, the drone control apparatus 40 comprises:
a data obtaining module 401, configured to obtain drone control data to be sent to a target drone; and
a sending module 402, configured to send a data forwarding message to a substitute remote control terminal, where the data forwarding message carries the drone control data, and the data forwarding message is used to instruct the substitute remote control terminal to forward the drone control data to the target drone.

In a possible design, the drone control apparatus 40 further comprises a receiving module 403, configured to receive target drone data forwarded by the substitute remote control terminal, where the target drone data is drone data collected by the target drone.

In a possible design, the sending module 402 is further configured to: obtain a content protection key of the target drone; and send the content protection key of the target drone to the substitute remote control terminal.

In a possible design, the drone control apparatus 40 further comprises a receiving module 403 and an identity management module 404. The receiving module 403 is configured to receive, within a preset connection period, a first heartbeat connection message sent by the substitute remote control terminal, where the first heartbeat connection message carries first identity information, the first identity information comprises a first identity identifier, and the first identity identifier is used to indicate a substitute identity of the substitute remote control terminal; and the identity management module 404 is configured to: if the first heartbeat connection message sent by the substitute remote control terminal is not received within the preset connection period, release a primary control identity of the primary remote control terminal, so that the primary remote control terminal is restored to an unknown remote control terminal in the drone remote control system, and start an identity confirmation procedure of the unknown remote control terminal in the drone remote control system.

**In** a possible design, the first identity information further comprises a remaining capacity of the substitute remote control terminal; and the identity management module 404 is further configured to: if the remaining capacity of the substitute remote control terminal is less than a preset capacity, release the primary control identity of the primary remote control terminal, so that the primary remote control terminal is restored to the unknown remote control terminal in the drone remote control system, and start the identity confirmation procedure of the unknown remote control terminal in the drone remote control system.

**In** a possible design, the drone control apparatus 40 further comprises a timeout module 405, configured to release a primary control identity of the primary remote control terminal in response to an identity reset instruction, so that the primary remote control terminal is restored to an unknown remote control terminal in the drone remote control system, and start an identity confirmation procedure of the unknown remote control terminal in the drone remote control system.

It should be noted that, for content not described in the embodiment corresponding to FIG. 4, reference may be made to the descriptions of the foregoing method embodiment. Details are not described herein again.

After obtaining the drone control data to be sent to the target drone, the apparatus sends the data forwarding message to the substitute remote control terminal, where the data forwarding message carries the drone control data, and the data forwarding message is used to instruct the substitute remote control terminal to forward the drone control data to the target drone. The primary remote control terminal adds, to the data forwarding message, the drone control data to be sent to the drone, and the substitute remote control terminal replaces the primary remote control terminal to send the drone control data to the drone. Therefore, a position of the primary remote control terminal can be in a hidden state, so that a position can be in a hidden state when a drone pilot controls the drone by using the primary remote control terminal, thereby protecting the position of the drone pilot. In addition, because the function other than the image transmission function of the substitute remote control terminal is in a disabled state, the substitute remote control terminal only needs to replace the primary remote control terminal to send the control data to the drone, so that a position exposure risk of the substitute remote control terminal can be reduced, thereby further ensuring security and privacy of drone control.

Refer to FIG. 5. FIG. 5 is a schematic diagram of a structure of a drone control apparatus according to an embodiment of this application. The apparatus is applied to a substitute remote control terminal in a drone remote control system. The drone remote control system may be shown in FIG. 1. As shown in FIG. 5, the drone control apparatus 50 comprises:
a receiving module 501, configured to receive a data forwarding message sent by a primary remote control terminal, where the data forwarding message carries drone control data to be sent to a target drone; and
a sending module 502, configured to forward the drone control data to the target drone.

In a possible design, the receiving module 501 is configured to receive target drone data sent by the target drone, where the target drone data is drone data collected by the target drone; and the sending module 502 is further configured to forward the target drone data to the primary remote control terminal.

In a possible design, the receiving module 501 is further configured to receive a content protection key of the target drone sent by the primary remote control terminal.

In a possible design, the receiving module 501 is further configured to receive, within a preset connection period, a second heartbeat connection message sent by the primary remote control terminal, where the second heartbeat connection message carries second identity information, the second identity information comprises a second identity identifier, and the second identity identifier is used to indicate a primary control identity of the primary remote control terminal; and the drone control apparatus 50 further comprises an identity management module 503, configured to: if the second heartbeat connection message sent by the primary remote control terminal is not received within the preset connection period, release a substitute identity of the substitute remote control terminal, so that the substitute remote control terminal is restored to an unknown remote control terminal in the drone remote control system.

In a possible design, the drone control apparatus 50 further comprises: an identity management module 503, configured to: release a substitute identity of the substitute remote control terminal in response to an identity reset instruction, so that the substitute remote control terminal is restored to an unknown remote control terminal in the drone remote control system, and start an identity confirmation procedure of the unknown remote control terminal in the drone remote control system.

It should be noted that, for content not described in the embodiment corresponding to FIG. 5, reference may be made to the descriptions of the foregoing method embodiment. Details are not described herein again.

After obtaining the data forwarding message sent by the primary remote control terminal, the apparatus forwards the drone control data in the data forwarding message to the target drone. The primary remote control terminal adds, to the data forwarding message, the drone control data to be sent to the drone, and the substitute remote control terminal replaces the primary remote control terminal to send the drone control data to the drone. Therefore, a position of the primary remote control terminal can be in a hidden state, so that a position can be in a hidden state when a drone pilot controls the drone by using the primary remote control terminal, thereby protecting the position of the drone pilot. In addition, because a function other than an image transmission function of the substitute remote control terminal is in a disabled state, the substitute remote control terminal only needs to replace the primary remote control terminal to send the control data to the drone, so that a position exposure risk of the substitute remote control terminal can be reduced, thereby further ensuring security and privacy of drone control.

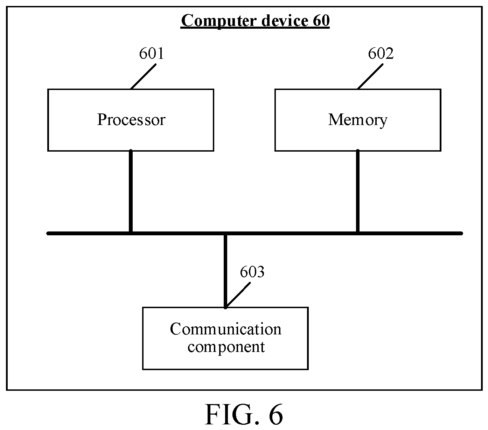

Refer to FIG. 6. FIG. 6 is a schematic diagram of a structure of a computer device according to an embodiment of this application. The computer device 60 comprises a processor 601, a memory 602, and a communication component 603. The memory 602 and the communication component 603 are connected to the processor 601, for example, are connected to the processor 601 by using a bus.

The processor 601 is configured to support the computer device 60 to execute a corresponding function in the method in the foregoing method embodiment. The processor 601 may be a central processing unit (CPU), a network processor (NP), a hardware chip, or any combination thereof. The hardware chip may be an application-specific integrated circuit (ASIC), a programmable logic device (PLD), or a combination thereof. The PLD may be a complex programmable logic device (CPLD), a field programmable gate array (FPGA), a generic array logic (GAL), or any combination thereof.

The memory 602 is configured to store program code or the like. The memory 602 may include a volatile memory (VM), for example, a random access memory (RAM). Alternatively, the memory 602 may include a non-volatile memory (NVM), such as a read-only memory (ROM), a flash memory, a hard disk drive (HDD), or a solid-state drive (SSD). The memory 602 may further include a combination of the foregoing types of memories.

The communication component 603 is configured to send or receive data. The communication component 603 may include a communication interface. The communication interface is, for example, a wired communication interface. The communication component 603 may further include a wireless transceiver.

When the computer device 60 is used as a primary remote control terminal in a drone remote control system, the processor 601 may invoke the program code to perform the following operations:
obtaining drone control data to be sent to a target drone; and
sending a data forwarding message to a substitute remote control terminal, where the data forwarding message carries the drone control data, and the data forwarding message is used to instruct the substitute remote control terminal to forward the drone control data to the target drone.

When the computer device 60 is used as a substitute remote control terminal in a drone remote control system, the processor 601 may invoke the program code to perform the following operations:
receiving a data forwarding message sent by a primary remote control terminal, where the data forwarding message carries drone control data to be sent to a target drone; and
forwarding the drone control data to the target drone.

An embodiment of this application further provides a computer-readable storage medium. The computer-readable storage medium stores a computer program. The computer program comprises a program instruction. The computer instruction causes, when executed by a computer, the computer to perform the method described in the above embodiment.

A person of ordinary skill in the art may understand that all or some of the processes of the methods in the embodiments may be implemented by a computer program instructing relevant hardware. The program may be stored in a computer-readable storage medium. When the program is executed, the procedures of the foregoing method embodiments are performed. The storage medium may be a magnetic disk, an optical disk, a read-only memory (ROM), a random access memory (RAM), or the like.

What is disclosed above is merely exemplary embodiments of this application, and certainly is not intended to limit the scope of the claims of this application. Therefore, equivalent variations made in accordance with the claims of this application shall fall within the scope of this application.

## Claims

1. A drone control method, applied to a primary remote control terminal (101) in a drone remote control system (10), wherein the drone remote control system (10) comprises at least two interconnected remote control terminals, the at least two remote control terminals comprise the primary remote control terminal (101) and a substitute remote control terminal (102) corresponding to the primary remote control terminal (101), and a function other than an image transmission function of the substitute remote control terminal (102) is in a disabled state; and
the method comprises:
obtaining drone control data to be sent to a target drone; and
sending a data forwarding message to the substitute remote control terminal (102), wherein the data forwarding message carries the drone control data, and the data forwarding message is used to instruct the substitute remote control terminal (102) to forward the drone control data to the target drone.

2. The method according to claim 1,
wherein the method further comprises: receiving target drone data forwarded by the substitute remote control terminal (102), wherein the target drone data is drone data collected by the target drone;
and/or
wherein, before the obtaining drone control data to be sent to a target drone, the method further comprises: obtaining a content protection key of the target drone; and sending the content protection key of the target drone to the substitute remote control terminal (102).

3. The method according to any one of claims 1 to 2, wherein the method further comprises:
receiving, within a preset connection period, a first heartbeat connection message sent by the substitute remote control terminal (102), wherein the first heartbeat connection message carries first identity information, the first identity information comprises a first identity identifier, and the first identity identifier is used to indicate a substitute identity of the substitute remote control terminal (102); and
if the first heartbeat connection message sent by the substitute remote control terminal (102) is not received within the preset connection period, releasing a primary control identity of the primary remote control terminal (101), so that the primary remote control terminal (101) is restored to an unknown remote control terminal (103) in the drone remote control system (10), and starting an identity confirmation procedure of the unknown remote control terminal (103) in the drone remote control system (10).

4. The method according to claim 3, wherein the first identity information further comprises a remaining capacity of the substitute remote control terminal (102); and
the method further comprises:
if the remaining capacity of the substitute remote control terminal (102) is less than a preset capacity, releasing the primary control identity of the primary remote control terminal (101), so that the primary remote control terminal (101) is restored to the unknown remote control terminal (103) in the drone remote control system (10), and starting the identity confirmation procedure of the unknown remote control terminal (103) in the drone remote control system (10).

5. The method according to any one of claims 1 to 2, wherein the method further comprises:
releasing a primary control identity of the primary remote control terminal (101) in response to an identity reset instruction, so that the primary remote control terminal (101) is restored to an unknown remote control terminal (103) in the drone remote control system (10), and starting an identity confirmation procedure of the unknown remote control terminal (103) in the drone remote control system (10).

6. A drone control method, applied to a substitute remote control terminal (102) corresponding to a primary remote control terminal (101) in a drone remote control system (10), wherein the drone remote control system (10) comprises at least two interconnected remote control terminals, the at least two remote control terminals comprise the primary remote control terminal (101) and the substitute remote control terminal (102), and a function other than an image transmission function of the substitute remote control terminal (102) is in a disabled state; and
the method comprises:
receiving a data forwarding message sent by the primary remote control terminal (101), wherein the data forwarding message carries drone control data to be sent to a target drone; and
forwarding the drone control data to the target drone.

7. The method according to claim 6, wherein the method further comprises:
receiving target drone data sent by the target drone, wherein the target drone data is drone data collected by the target drone; and
forwarding the target drone data to the primary remote control terminal (101).

8. The method according to claim 6, before the receiving a data forwarding message sent by the primary remote control terminal (101), further comprising:
receiving a content protection key of the target drone sent by the primary remote control terminal (101).

9. The method according to any one of claims 6 to 8, wherein the method further comprises:
receiving, within a preset connection period, a second heartbeat connection message sent by the primary remote control terminal (101), wherein the second heartbeat connection message carries second identity information, the second identity information comprises a second identity identifier, and the second identity identifier is used to indicate a primary control identity of the primary remote control terminal (101); and
if the second heartbeat connection message sent by the primary remote control terminal (101) is not received within the preset connection period, releasing a substitute identity of the substitute remote control terminal (102), so that the substitute remote control terminal (102) is restored to an unknown remote control terminal (103) in the drone remote control system (10).

10. The method according to any one of claims 6 to 8, wherein the method further comprises:
releasing a substitute identity of the substitute remote control terminal (102) in response to an identity reset instruction, so that the substitute remote control terminal (102) is restored to an unknown remote control terminal (103) in the drone remote control system (10), and starting an identity confirmation procedure of the unknown remote control terminal (103) in the drone remote control system (10).

11. A drone control apparatus (40, 50), applied to a primary remote control terminal (101) in a drone remote control system (10), wherein the drone remote control system (10) comprises at least two interconnected remote control terminals, the at least two remote control terminals comprise the primary remote control terminal (101) and a substitute remote control terminal (102) corresponding to the primary remote control terminal (101), and a function other than an image transmission function of the substitute remote control terminal (102) is in a disabled state; and
the apparatus comprises:
a data obtaining module (401), configured to obtain drone control data to be sent to a target drone; and
a sending module (402, 502), configured to send a data forwarding message to the substitute remote control terminal (102), wherein the data forwarding message carries the drone control data, and the data forwarding message is used to instruct the substitute remote control terminal (102) to forward the drone control data to the target drone.

12. A drone control apparatus (40, 50), applied to a substitute remote control terminal (102) corresponding to a primary remote control terminal (101) in a drone remote control system (10), wherein the drone remote control system (10) comprises at least two interconnected remote control terminals, the at least two remote control terminals comprise the primary remote control terminal (101) and the substitute remote control terminal (102), and a function other than an image transmission function of the substitute remote control terminal (102) is in a disabled state; and
the apparatus comprises:
a receiving module (403, 501), configured to receive a data forwarding message sent by the primary remote control terminal (101), wherein the data forwarding message carries drone control data to be sent to a target drone; and
a sending module (402, 502), configured to forward the drone control data to the target drone.

13. A computer device (60), comprising a memory (602), a processor (601), and a communication component (603), wherein the memory (602) and the communication component (603) are connected to the processor (601), the communication component (603) is configured to send or receive data, the processor (601) is configured to execute one or more computer programs stored in the memory (602), and the processor (601) causes, when executing the one or more computer programs, the computer device (60) to implement the method according to any one of claims 1 to 5 or any one of claims 6 to 10.

14. A computer-readable storage medium, wherein the computer-readable storage medium stores a computer program, the computer program comprises a program instruction, and the program instruction, when executed by a processor (601), causes the processor (601) to perform the method according to any one of claims 1 to 5 or any one of claims 6 to 10.

15. A drone remote control system (10), wherein the drone remote control system (10) comprises at least two interconnected remote control terminals, the at least two remote control terminals comprise a primary remote control terminal (101) and a substitute remote control terminal (102) corresponding to the primary remote control terminal (101), and a function other than an image transmission function of the substitute remote control terminal (102) is in a disabled state; and the primary remote control terminal (101) is configured to perform the method according to any one of claims 1 to 5, and the substitute remote control terminal (102) is configured to perform the method according to any one of claims 6 to 10.
